# EUROPEAN PATENT APPLICATION

(11) **EP 4 209 314 A1**
(43) Date of publication of application: **12.07.2023**
(21) Application number: 21863866.6
(22) Date of filing: 05.03.2021
(51) Int. Cl.: B25J 9/22, G05B 19/05

(54) **CONTROL DEVICE, CONTROL SYSTEM, AND PROGRAM**

(30) Priority: 04.09.2020 JP 2020149365
(71) Applicant: OMRON Corporation, Kyoto 600-8530 (JP)
(72) Inventor: IWAMURA, Shintaro, Kyoto-shi, Kyoto 600-8530 (JP)
(74) Representative: Mewburn Ellis LLP
(86) International application number: PCT/JP2021/008668
(87) International publication number: WO 2022/049805

(57) **Abstract**

Provided is a configuration capable of realizing complicated control with a simpler configuration and facilitating program development. A control device for controlling a control target includes: a PLC engine configured to cyclically execute a program including a sequence instruction; a robot control engine configured to control a robot; an image processing engine configured to execute image processing on an image from a camera; and a simulation module configured to simulate at least a part of the control target, the robot, and the camera, the simulation module being constructed according to user setting.

## Description

### TECHNICAL FIELD

The present invention relates to a control device for controlling a control target, a control system for controlling a control target, and a program for realizing the control device.

### BACKGROUND ART

In the field of factory automation (FA), a system that detects a target object by a visual sensor and controls a motor, a robot, and the like based on the detection result has been realized.

For example, Japanese Patent Laying-Open No. 2019-215635 (PTL 1) discloses a control system capable of positioning a target object with high accuracy. The control system includes a motion controller configured by a programmable logic controller (PLC) or the like and a visual sensor.

### CITATION LIST

### PATENT LITERATURE

PTL 1: Japanese Patent Laying-Open No. 2019-215635

### SUMMARY OF INVENTION

### TECHNICAL PROBLEM

In the literature cited above, the motion controller and the visual sensor are independent of each other, and exchange data via an arbitrary interface. In a case where a configuration in which a plurality of devices exchanges data via an interface is adopted, a transmission delay or the like is relatively large, and there is a possibility that realization of high-speed control is hindered.

An object of the present invention is to provide a configuration capable of realizing complicated control with a simpler configuration and facilitating program development as compared with the conventional configuration.

### SOLUTION TO PROBLEM

According to an embodiment of the present invention, a control device for controlling a control target is provided. The control device includes a PLC engine configured to cyclically execute a program including a sequence instruction, a robot control engine configured to control a robot, an image processing engine configured to execute image processing on an image from a camera, and a simulation module configured to simulate at least a part of the control target, the robot, and the camera, the simulation module being constructed according to user setting.

According to this configuration, even when there is no control target, it is possible to confirm and verify processes of the PLC engine, the robot control engine, and the image processing engine by applying the simulation module. Thus, program development executed by the control device can be facilitated.

Further, according to this configuration, the control target can be controlled by a process in which the PLC engine, the robot control engine, and the image processing engine are arbitrarily combined.

The control device may further include a visualizer configured to visualize a state of the control target in a virtual space based on processing results of the PLC engine, the robot control engine, and the image processing engine. According to this configuration, even when a part or all of the control target does not exist, it is possible to confirm the state of the control target.

The simulation module may be realized by using a result of collision detection in the virtual space visualized by the visualizer. According to this configuration, an arbitrary control target can be simulated using the state reproduced in the virtual space.

The simulation module may be realized by using an emulator configured to simulate a behavior of a device and/or equipment included in the control target. According to this configuration, a behavior of an arbitrary device and/or equipment can be simulated by adopting the emulator.

The simulation module may be realized by using a simulator configured to simulate a physical motion of an object included in the control target. According to this configuration, it is possible to provide a simulation module reflecting a physical motion of the object included in the control target by using the simulator.

The control device further incudes a user interface configured to receive selection of an arbitrary device from candidates including a real device and a virtual device, the device being associated with one of the PLC engine, the robot control engine, and the image processing engine, and construction means configured to, when the virtual device is selected, construct the simulation module corresponding to the selected virtual device. According to this configuration, it is possible for a user to arbitrarily select a device to be associated with the control device.

The PLC engine may cyclically execute a motion control instruction for controlling one or more motors that drive a robot, and the robot control engine may sequentially generate an instruction for controlling the robot according to a robot program. According to this configuration, in addition to the robot controlled by the robot control engine, a robot of another control system can also be controlled.

The control device may further include a hypervisor configured to manage common hardware resources. The hypervisor may provide an execution environment for a real-time OS and a general-purpose OS. The PLC engine may be running on the real-time OS. The robot control engine and the image processing engine may be running on the general-purpose OS. According to this configuration, a plurality of types of processes can be realized in combination using common hardware resources.

According to another embodiment of the present invention, a control system for controlling a control target is provided. The control system includes a control device including a PLC engine configured to cyclically execute a program including a sequence instruction, a robot control engine configured to control a robot, and an image processing engine configured to execute image processing on an image from a camera. The control system includes a support device configured to construct, according to user setting, a simulation module that simulates at least a part of the control target, the robot, and the camera, and to provide the constructed simulation module for the control device.

According to still another embodiment of the present invention, a program for realizing a control device for controlling a control target is provided. The program causing a computer to function as a PLC engine configured to cyclically execute a program including a sequence instruction, a robot control engine configured to control a robot, an image processing engine configured to execute image processing on an image from a camera, and a simulation module configured to simulate at least a part of the control target, the robot, and the camera, the simulation module being constructed according to user setting.

### ADVANTAGEOUS EFFECTS OF INVENTION

According to the present invention, it is possible to provide a configuration capable of realizing complicated control with a simpler configuration and facilitating program development.

### BRIEF DESCRIPTION OF DRAWINGS

Fig. 1 is a schematic diagram illustrating an application example of a control device according to the present embodiment.
Fig. 2 is a schematic diagram illustrating a configuration example of a control system according to the present embodiment.
Fig. 3 is a schematic diagram illustrating a hardware configuration example of a control device constituting the control system according to the present embodiment.
Fig. 4 is a schematic diagram illustrating a hardware configuration example of a support device constituting the control system according to the present embodiment.
Fig. 5 is a schematic diagram illustrating an example of a software configuration realized by the control device constituting the control system according to the present embodiment.
Fig. 6 is a schematic diagram illustrating a main part of the software configuration realized by the control device constituting the control system according to the present embodiment.
Fig. 7 is a schematic diagram illustrating an example of a control target of the control system according to the present embodiment.
Fig. 8 is a flowchart showing a procedure in a conveyor system shown in Fig. 7.
Fig. 9 is a schematic diagram illustrating an example of a software configuration realized by a control device for realizing the processing in the conveyor system illustrated in Fig. 7.
Fig. 10 is a schematic diagram illustrating a more detailed configuration of a visualizer implemented in the control system according to the present embodiment.
Fig. 11 is a schematic diagram illustrating an example of a reproduced image provided by the visualizer implemented in the control system according to the present embodiment.
Fig. 12 is a schematic diagram illustrating an example of a software configuration for executing processing in the control device even when the conveyor system illustrated in Fig. 7 does not exist.
Fig. 13 is a schematic diagram illustrating a setting example of a virtual object for performing collision detection by a visualizer illustrated in Fig. 12.
Fig. 14 is a diagram for describing a case in which a user program is executed in a state where an industrial robot is not disposed in the conveyor system illustrated in Fig. 7.
Fig. 15 is a schematic diagram illustrating an example of a software configuration for realizing the state illustrated in Fig. 14.
Fig. 16 is a view illustrating an example of a setting screen related to a user program provided in the control system of the present embodiment.
Fig. 17 is a flowchart showing schematic processing of a development process of a user program in the control system according to the present embodiment.

### DESCRIPTION OF EMBODIMENT

An embodiment of the present invention will be described in detail with reference to the drawings. The same or corresponding parts in the drawings are denoted by the same reference numerals, and the descriptions thereof will not be repeated.

### <A. Application examples>

First, an example of a scene to which the present invention is applied will be described. A control device according to the present embodiment can control various devices by combining various processing logics.

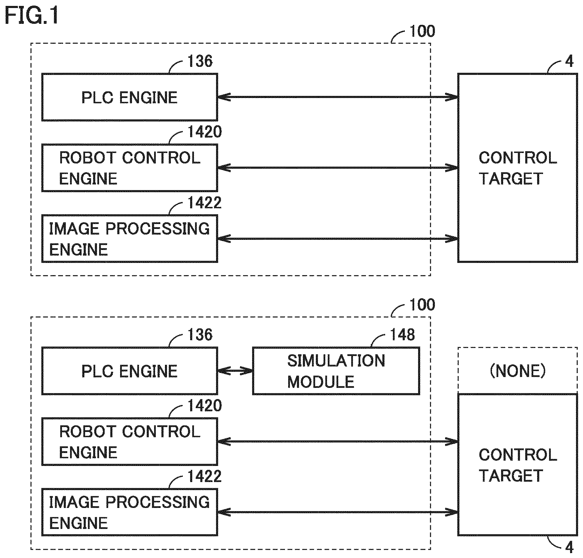

Fig. 1 is a schematic diagram illustrating an application example of a control device 100 according to the present embodiment. Referring to Fig. 1, control device 100 controls an arbitrary control target 4.

In the present specification, the "control target" is not limited to a device and/or equipment for producing a certain object, and includes an arbitrary device that provides arbitrary information for control device 100 and an arbitrary device to which a command from control device 100 is output. That is, the "control target" may include any device related to the control operation in control device 100.

As illustrated in Fig. 1(A), control device 100 includes a PLC engine 136, a robot control engine 1420, and an image processing engine 1422.

PLC engine 136 is a module that provides a typical function as a PLC, and cyclically executes a program including a sequence instruction.

Robot control engine 1420 is a module that provides a function as a robot controller, and executes processing for controlling a robot.

Image processing engine 1422 is a module that provides a function as an image processing device, and executes image processing to an image from a camera.

PLC engine 136, robot control engine 1420, and image processing engine 1422 can exchange data.

Fig. 1(A) illustrates a state in which control device 100 controls actual control target 4. PLC engine 136, robot control engine 1420, and image processing engine 1422 control the control target 4 while exchanging data as necessary.

As described above, control device 100 according to the present embodiment has a plurality of types of control functions, and can perform control with a simpler configuration.

Note that there may be a state in which a part of control target 4 cannot be prepared yet in a stage in which an equipment and/or a machine to be controlled by control device 100 is being constructed. Even in such a case, by using a simulation module 148, control device 100 according to the present embodiment can execute processing in a state similar to a state in which an actual control target exists.

Fig. 1(B) illustrates a configuration example in which simulation module 148 is implemented instead of a part of control target 4. Simulation module 148 simulates at least a part of control target 4, a robot, and a camera. Simulation module 148 is arbitrarily constructed according to user setting. A target to be simulated by simulation module 148 may be any of the above.

By arbitrarily implementing such simulation module 148, it is possible to confirm a behavior of a program executed by control device 100 even if all of control target 4 cannot be used. With such a function, development of a program executed by control device 100 can be facilitated.

### <B. Configuration example of control system>

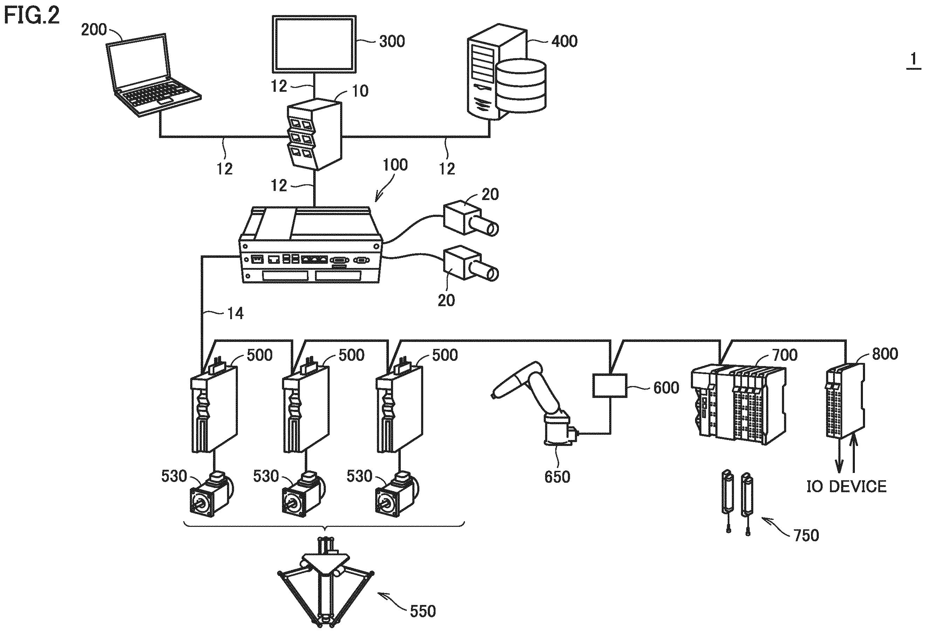

Fig. 2 is a schematic diagram illustrating a configuration example of a control system 1 according to the present embodiment. A configuration example of control system 1 according to the present embodiment will be described with reference to Fig. 2.

Control system 1 is an integrated system that controls various devices with one control device. More specifically, control system 1 includes control device 100 for realizing integrated control. Control device 100 is a device for controlling a control target, and is typically realized by using hardware (for example, an industrial personal computer) according to a general-purpose architecture.

Control system 1 further includes one or more devices connected to control device 100 via a field network 14 that is an industrial network. As an example of a protocol of field network 14, EtherCAT (registered trademark) may be adopted.

As an example of the device, control system 1 illustrated in Fig. 2 includes a servo driver 500 constituting a custom robot 550, a robot controller 600 for controlling an industrial robot 650, a safety controller 700, and an IO unit 800.

A safety device 750 such as a light curtain is electrically connected to safety controller 700, and arbitrary sensor and/or arbitrary actuator is electrically connected to IO unit 800.

Control device 100 is connected to a support device 200, a display device 300, and a server device 400 via an upper network 12. Upper network 12 may realize a branched topology using a network hub 10. As an example of a protocol of upper network 12, industrial Ethernet (registered trademark) such as EtherNet/IP may be adopted.

Control device 100 is connected to a camera 20 for image processing. As will be described later, control device 100 may have a function of processing an image captured by camera 20.

As described above, according to the present embodiment, it is possible to provide integrated control system 1 in which one control device 100 controls various devices.

### <C. Hardware configuration example>

Next, an example of a hardware configuration of each device constituting control system 1 according to the present embodiment will be described.

### (c1: Control device 100)

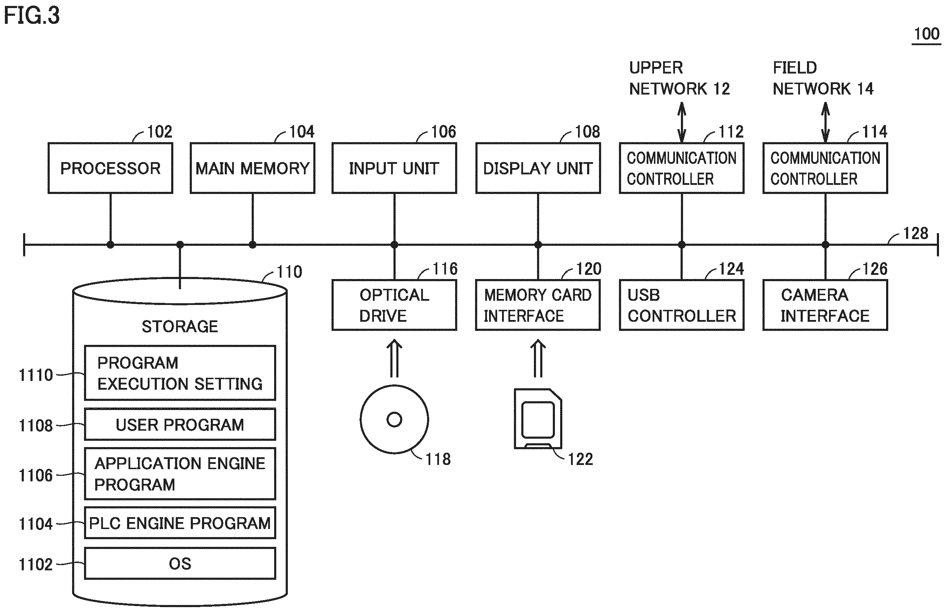

Fig. 3 is a schematic diagram illustrating a hardware configuration example of control device 100 constituting control system 1 according to the present embodiment. Referring to Fig. 3, control device 100 includes a processor 102, a main memory 104, an input unit 106, a display unit 108, a storage 110, communication controllers 112,114, an optical drive 116, a memory card interface 120, a USB controller 124, and a camera interface 126. These components are connected via a processor bus 128.

Processor 102 corresponds to an operation processing unit that executes a control operation, and includes a central processing unit (CPU), a graphics processing unit (GPU), or the like. Specifically, processor 102 reads a program stored in storage 110, develops the program the program in main memory 104 to execute the program, thereby realizing a control operation according to a control target and various processes as described later.

Main memory 104 includes a volatile storage device such as a dynamic random access memory (DRAM) or a static random access memory (SRAM). Storage 110 includes, for example, a non-volatile storage device such as a solid state drive (SSD) or a hard disk drive (HDD).

Input unit 106 includes a keyboard, a mouse, and the like, and receives a user operation.

Display unit 108 includes a display, various indicators, and the like, and outputs processing results and the like from processor 102.

Storage 110 stores an operating system (OS) 1102 for realizing basic functions, a PLC engine program 1104, an application engine program 1106, a user program 1108, and program execution setting 1110. OS 1102 may include a hypervisor, a real time operating system (RTOS), and a general-purpose OS for realizing a virtual environment as described later. PLC engine program 1104 provides an execution environment corresponding to the PLC. Application engine program 1106 provides an environment for executing an arbitrary application program.

OS 1102, PLC engine program 1104, and application engine program 1106 correspond to main programs for realizing control device 100.

User program 1108 may include an application program for realizing processing related to robot control and a visual sensor, and a PLC program including a sequence instruction and/or a motion control instruction. The PLC program may be described in a format conforming to IEC 61131-3, and therefore, a program executed by the PLC engine is also referred to as an "IEC program" below. Note that, in the present specification, the "IEC program" may include a program described in a format not conforming to IEC 61131-3.

Program execution setting 1110 includes a setting value that defines an environment for executing user program 1108. As described later, program execution setting 1110 defines enabling/disabling of simulation module 148 that simulates a part or all of the control target, a connection relationship with each engine, and the like.

Communication controllers 112,114 exchange data with an arbitrary information processing device via an arbitrary network. In control system 1 shown in Fig. 2, communication controller 112 is in charge of data communication via upper network 12, and communication controller 114 is in charge of data communication via field network 14.

Optical drive 116 can read arbitrary data from a storage medium 118 (for example, an optical storage medium such as a digital versatile disc (DVD)) that non-transiently stores a computer-readable program, and write arbitrary data to storage medium 118.

Memory card interface 120 receives a memory card 122 that is an example of a removable storage medium. Memory card interface 120 can read arbitrary data from memory card 122, and write arbitrary data to memory card 122.

USB controller 124 exchanges data with an arbitrary information processing device via USB connection.

### (c2: Support device 200)

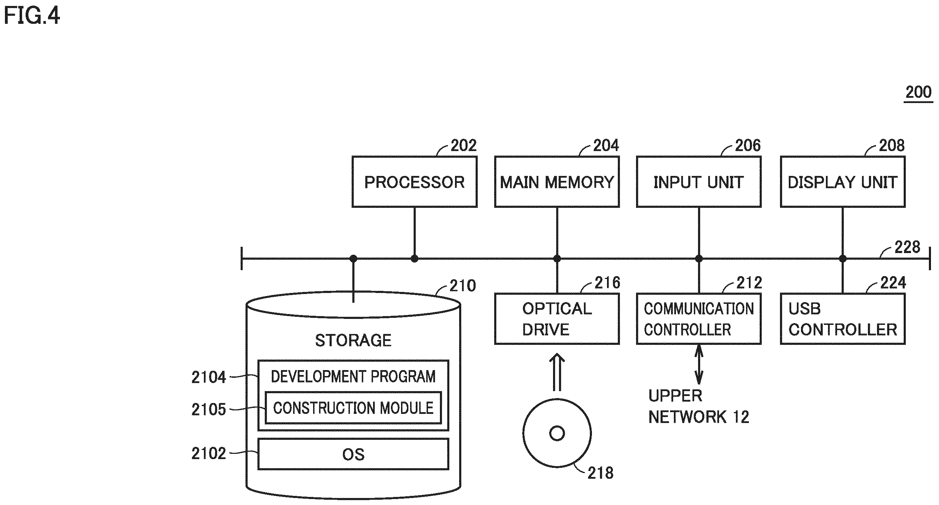

Fig. 4 is a schematic diagram illustrating a hardware configuration example of support device 200 constituting control system 1 according to the present embodiment. Referring to Fig. 4, support device 200 is realized, for example, by using hardware having a general-purpose architecture (for example, a general-purpose personal computer).

Support device 200 provides an integrated development environment with which it is integrally possible to perform setting for each device included in control system 1 and create a program executed by each device. In the integrated development environment, it is possible to perform settings, program creation, debugging, and the like for control device 100, display device 300, servo driver 500, robot controller 600, safety controller 700, and the like.

Referring to Fig. 4, support device 200 includes a processor 202, a main memory 204, an input unit 206, a display unit 208, a storage 210, a communication controller 212, an optical drive 216, and a USB controller 224. These components are connected via a processor bus 228.

Processor 202 includes a CPU, a GPU, or the like, and reads a program stored in storage 210 (as an example, an OS 2102 and a development program 2104), develops the read program in main memory 204 to execute the program, thereby realizing various processes as described later.

Main memory 204 includes a volatile storage device such as a DRAM or an SRAM. Storage 210 includes, for example, a non-volatile storage device such as an HDD or an SSD.

Storage 210 stores OS 2102 for realizing basic functions, development program 2104 for realizing the integrated development environment, and the like.

Development program 2104 provides the integrated development environment by being executed by processor 202. Development program 2104 includes a construction module 2105 that constructs simulation module 148 corresponding to the selected virtual device. Processing related to the construction of simulation module 148 will be described later.

Input unit 206 includes a keyboard, a mouse, and the like, and receives a user operation.

Display unit 208 includes a display, various indicators, and the like, and outputs processing results and the like from processor 202.

Communication controller 212 exchanges data with an arbitrary information processing device via an arbitrary network. In Fig. 2, in control system 1, communication controller 212 is in charge of data communication via upper network 12.

Optical drive 216 can read arbitrary data from a storage medium 218 (for example, an optical storage medium such as a DVD) that non-transiently stores a computer-readable program, and write arbitrary data to storage medium 218.

USB controller 224 exchanges data with an arbitrary information processing device via USB connection.

From storage medium 218 that non-transiently stores a computer-readable program, the program stored therein may be read and installed in storage 210 or the like. Alternatively, various programs executed by support device 200 may be installed by being downloaded from a server device or the like on the network. Functions provided by support device 200 according to the present embodiment may be realized by using a part of modules provided by the OS.

Support device 200 may be removed from control device 100 during operation of control system 1.

### (c3: Display device 300)

Display device 300 constituting control system 1 according to the present embodiment is also referred to as a human machine interface (HMI) or a programmable terminal (PT), provides a monitoring operation screen with reference to information held by control device 100, and sends an instruction corresponding to a user operation to control device 100.

As an example, display device 300 is realized by using hardware having a general-purpose architecture (for example, a general-purpose personal computer). An example of a basic hardware configuration is similar to the example of the basic hardware configuration of support device 200 illustrated in Fig. 4, and thus, the detailed description will not be made here.

### (c4: Server device 400)

Server device 400 constituting control system 1 according to the present embodiment functions as, for example, a file server, a manufacturing execution system (MES), a production management system, and the like.

As an example, server device 400 is realized by using hardware having a general-purpose architecture (for example, a general-purpose personal computer). An example of a basic hardware configuration is similar to the example of the basic hardware configuration of support device 200 illustrated in Fig. 4, and thus, the detailed description will not be made here.

### (c5: Servo driver 500)

Servo driver 500 constituting control system 1 according to the present embodiment drives servomotors 530 that are electrically connected. Each of servomotors 530 is mechanically coupled to a movement mechanism of custom robot 550. Servo driver 500 is an example of a motor driver, and a motor driver different from servo driver 500 may be adopted. Similarly, servomotor 530 is an example of a motor, and it is possible to employ a motor different from servomotor 530 (for example, an induction motor, a linear motor, or the like). As the motor driver, a configuration corresponding to a motor to be driven can be adopted.

### (c6: Robot controller 600)

Robot controller 600 constituting control system 1 according to the present embodiment drives industrial robot 650 in accordance with a command from control device 100. As industrial robot 650, for example, any general-purpose robot such as a vertical articulated robot, a horizontal articulated (SCARA) robot, a parallel link robot, or a Cartesian coordinate robot may be used.

### (c7: Safety controller 700)

Safety controller 700 constituting control system 1 according to the present embodiment executes safety control. Safety controller 700 typically includes a processing unit that performs a control operation related to safety control, and one or more safety expansion units electrically connected to safety device 750.

### (c8: IO unit 800)

IO unit 800 constituting control system 1 according to the present embodiment receives a signal from an arbitrary sensor and outputs a command to an arbitrary actuator. That is, IO unit 800 is electrically connected to the arbitrary IO device.

### (c9: Other forms)

The above-described device may adopt an implementation in which necessary functions are provided by one or more processors executing programs, or may adopt an implementation in which some or all of the necessary functions are implemented using a dedicated hardware circuit (for example, an application specific integrated circuit (ASIC), a field-programmable gate array (FPGA), or the like.).

### <D. Software configuration example>

Next, an example of a software configuration realized by control device 100 constituting control system 1 according to the present embodiment will be described.

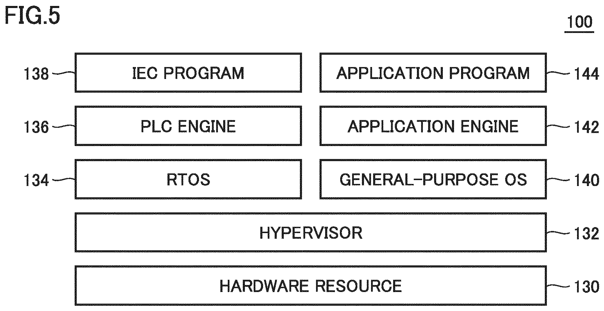

Fig. 5 is a schematic diagram illustrating the example of the software configuration realized in control device 100 constituting control system 1 according to the present embodiment. Referring to Fig. 5, control device 100 provides a virtual environment in which common hardware resources 130 can be shared by a plurality of systems.

More specifically, in control device 100, a hypervisor 132 that manages common hardware resources 130, an RTOS 134, PLC engine 136, an IEC program 138, a general-purpose OS 140, an application engine 142, and an application program 144 are realized.

Hypervisor 132 provides an execution environment for RTOS 134 and general-purpose OS 140. Note that hypervisor 132, RTOS 134, and general-purpose OS 140 are realized by executing codes included in OS 1102 (Fig. 3).

PLC engine 136 is realized by executing a code included in PLC engine program 1104 (Fig. 3). PLC engine 136 is executed on RTOS 134.

Application engine 142 is realized by executing a code included in application engine program 1106 (Fig. 3). Application engine 142 is executed on general-purpose OS 140.

IEC program 138 and application program 144 may be included in user program 1108 (Fig. 3).

PLC engine 136 of control device 100 provides an environment in which IEC program 138 can be cyclically executed at a predetermined control cycle. In addition, application engine 142 of control device 100 provides an environment in which an arbitrary application program 144 executable on the general-purpose OS can be executed.

As described above, in control device 100, both a function provided by the PLC and a function provided by the general-purpose personal computer are realized.

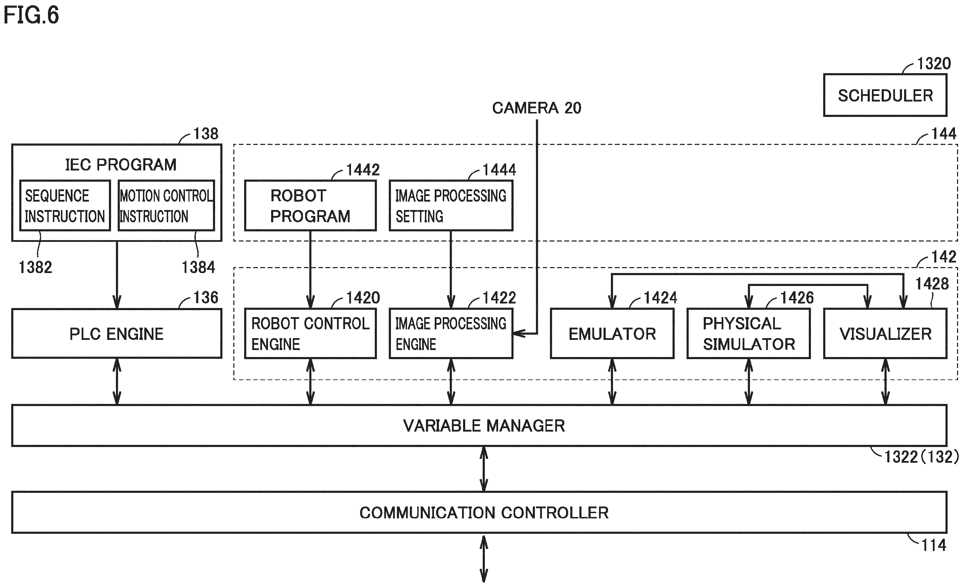

Fig. 6 is a schematic diagram illustrating a main part of the software configuration realized by control device 100 constituting control system 1 according to the present embodiment. Referring to Fig. 6, hypervisor 132 of control device 100 provides a scheduler 1320 and a variable manager 1322. Scheduler 1320 manages timing of executing each program in control device 100. Variable manager 1322 holds and updates a variable that can be referred to by each program executed by control device 100. A value of the variable managed by variable manager 1322 is transmitted to a corresponding device via communication controller 114, and the value of the variable managed by variable manager 1322 is updated with a value received from the device via communication controller 114.

PLC engine 136 cyclically executes a sequence instruction 1382 included in IEC program 138 with reference to the value of the variable managed by variable manager 1322. The value of the variable calculated by the execution of sequence instruction 1382 is reflected in variable manager 1322.

PLC engine 136 cyclically executes a motion control instruction 1384 included in IEC program 138 with reference to the value of the variable managed by variable manager 1322. The value of the variable calculated by the execution of motion control instruction 1384 is reflected in variable manager 1322. Motion control instruction 1384 typically includes one or more instructions for controlling servo driver 500 (see Fig. 2) constituting custom robot 550. Motion control instruction 1384 controls one or more motors that drive custom robot 550, and is cyclically executed.

Meanwhile, application engine 142 includes, for example, robot control engine 1420, image processing engine 1422, an emulator 1424, a physical simulator 1426, and a visualizer 1428. These programs are appropriately executed according to computing resources.

Robot control engine 1420 interprets a robot program 1442 included in application program 144 and sequentially generates an instruction for controlling industrial robot 650 (see Fig. 2). Robot program 1442 may be described in a programming language dedicated to robot control such as a V+ language, a programming language related to NC control such as a G code, or the like. In this manner, robot control engine 1420 sequentially generates an instruction for controlling industrial robot 650 in accordance with robot program 1442.

Image processing engine 1422 executes image processing on an image captured by camera 20 according to image processing setting 1444. A result of the image processing by image processing engine 1422 is reflected in variable manager 1322. The image processing executed by image processing engine 1422 includes, for example, flaw detection, object detection, object recognition, character recognition, and the like.

Emulator 1424 simulates a behavior of a control target (device, equipment, or the like) controlled by control device 100. Emulator 1424 refers to the value of the variable managed by variable manager 1322 and outputs a result according to a predefined model.

Physical simulator 1426 simulates a physical motion of an object included in the control target controlled by control device 100. Physical simulator 1426 refers to the value of the variable managed by variable manager 1322 and outputs a result according to the predefined physical model.

Note that emulator 1424 and physical simulator 1426 are not necessarily distinguished from each other.

Visualizer 1428 visualizes a state of the control target (device, equipment, or the like) controlled by control device 100 in a virtual space. Visualizer 1428 visualizes the state of the control target in the virtual space based on processing results of PLC engine 136, robot control engine 1420, and image processing engine 1422. More specifically, visualizer 1428 refers to the value of the variable managed by variable manager 1322, and generates data necessary for visualization reflecting the state at each time point according to the predefined model and setting.

As described later, control system 1 according to the present embodiment can control an actual control target, and can execute processing of entire control system 1 even in a case where a part or all of the control target does not exist.

### <E. Processing example>

Next, a processing example in control system 1 according to the present embodiment will be described.

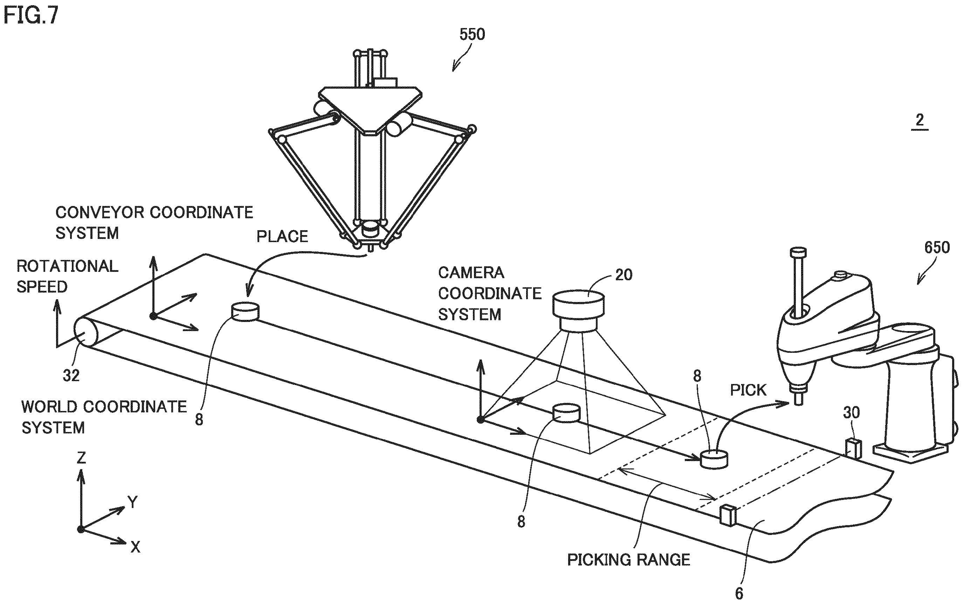

Fig. 7 is a schematic diagram illustrating an example of a control target of control system 1 according to the present embodiment. Referring to Fig. 7, a conveyor system 2 in which workpieces 8 are sequentially conveyed by a conveyor 6 is assumed as a control target of control system 1.

Custom robot 550 disposed on an upstream side of conveyor 6 places each of workpieces 8 on conveyor 6. Workpiece 8 conveyed to a downstream side by conveyor 6 is tracked based on an image captured by camera 20. Industrial robot 650 picks workpiece 8 based on a tracking result of workpiece 8. A range (picking range) in which industrial robot 650 picks workpiece 8 is determined in advance. On the downstream side of the picking range, a photoelectric sensor 30 for detecting workpiece 8 that has not been picked is provided.

In conveyor system 2 shown in Fig. 7, conveyor 6 can rotate at an arbitrary speed. Conveyor 6 is provided with an encoder 32, and a number of pulses (alternatively, a rotational speed calculated from the number of pulses) output from encoder 32 is input to control device 100. A conveyor coordinate system is defined for conveyor 6. A position of workpiece 8 on conveyor 6 is managed in the conveyor coordinate system.

Custom robot 550 moves in synchronization with the rotational speed of conveyor 6 so as not to cause a speed difference when workpiece 8 is placed on conveyor 6. Similarly, industrial robot 650 moves in synchronization with the rotational speed of conveyor 6 so as not to cause a speed difference when workpiece 8 is picked up from conveyor 6.

A camera coordinate system is defined for camera 20. The camera coordinate system is used to manage a position of workpiece 8 appearing in an image captured by camera 20.

Note that each of custom robot 550 and industrial robot 650 may have a unique coordinate system.

A world coordinate system is defined for entire conveyor system 2, and conversion matrices for mutually converting positions, respectively, between the world coordinate system and the conveyor coordinate system, and between the world coordinate system and the camera coordinate system are prepared in advance.

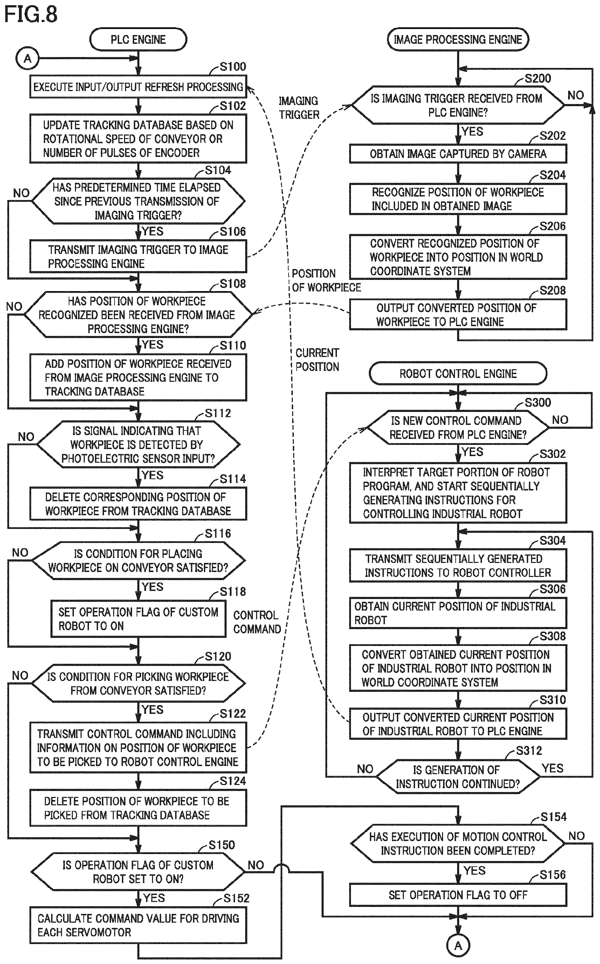

Fig. 8 is a flowchart illustrating a procedure in conveyor system 2 illustrated in Fig. 7. Referring to Fig. 8, the control on conveyor system 2 illustrated in Fig. 7 is typically realized by processing executed by each of PLC engine 136, robot control engine 1420, and image processing engine 1422 of control device 100.

PLC engine 136 executes input/output refresh processing (step S100). The input/output refresh processing includes processing of outputting a command value calculated in an immediately preceding control cycle to the device, and processing of obtaining input data from the device. The input data includes a rotational speed of conveyor 6, state values (position, speed, acceleration, etc.) of each servomotor 530 constituting custom robot 550, the current position of industrial robot 650, and the like.

PLC engine 136 updates a tracking database that manages the current position of each workpiece 8 on conveyor 6 based on the rotational speed of conveyor 6 or the number of pulses of encoder 32 (step S102). The tracking database includes the current position of each workpiece 8 on conveyor 6 in each control cycle. PLC engine 136 calculates a movement distance of workpiece 8 (a difference from the previous control cycle) based on the rotational speed of conveyor 6 and a length of the control cycle, and offsets the current position of each workpiece 8 included in the tracking database by the calculated movement distance.

PLC engine 136 determines whether predetermined time has elapsed since the previous transmission of an imaging trigger to image processing engine 1422 (step S104). If the predetermined time has elapsed since the last transmission of the imaging trigger to image processing engine 1422 (YES in step S104), PLC engine 136 transmits the imaging trigger to image processing engine 1422 (step S106).

If the predetermined time has not elapsed since the last transmission of the imaging trigger to image processing engine 1422 (NO in step S104), the processing in step S106 is skipped.

The processing of steps S104 and S106 corresponds to the processing of determining the timing at which an imaging range on conveyor 6 by camera 20 is imaged. The imaging timing is controlled so that same workpiece 8 is not redundantly included as a subject in the plurality of images captured by camera 20.

PLC engine 136 determines whether the position of workpiece 8 recognized based on the image captured by camera 20 has been received from image processing engine 1422 (step S108). If the position of workpiece 8 recognized based on the image captured by camera 20 is received from image processing engine 1422 (YES in step S108), PLC engine 136 adds the position of workpiece 8 received from image processing engine 1422 to the tracking database (step S110).

If the position of workpiece 8 recognized based on the image captured by camera 20 has not been received from image processing engine 1422 (NO in step S108), the processing in step S 110 is skipped.

It is determined whether a signal indicating that workpiece 8 is detected by photoelectric sensor 30 is input (step S112). If the signal indicating that workpiece 8 is detected by photoelectric sensor 30 is input (YES in step 5112), PLC engine 136 deletes the corresponding position of workpiece 8 from the tracking database (step S114).

If the signal indicating that workpiece 8 is detected by photoelectric sensor 30 is not input (NO in step S112), the processing in step S114 is skipped.

PLC engine 136 refers to the tracking database and determines whether a condition (place condition) for placing workpiece 8 on conveyor 6 is satisfied (step S116). If the place condition is satisfied (YES in step S116), PLC engine 136 sets an operation flag of custom robot 550 to ON (step S118).

If the place condition is not satisfied (NO in step S116), the processing in step S118 is skipped.

PLC engine 136 refers to the tracking database and determines whether or not a condition (pick condition) for picking workpiece 8 from conveyor 6 is satisfied (step S120). If the picking condition is satisfied (YES in step S120), PLC engine 136 transmits a control command including information on the position of workpiece 8 to be picked to robot control engine 1420 (step S122). Then, PLC engine 136 deletes the position of workpiece 8 to be picked from the tracking database (step S124).

If the picking condition is not satisfied (NO in step S120), the processes in steps S122 and S124 are skipped.

Note that the processing of steps S102 to S124 is mainly described in sequence instruction 1382 included in IEC program 138.

Subsequently, PLC engine 136 determines whether or not the operation flag of custom robot 550 is set to ON (step S 150). If the operation flag of custom robot 550 is set to ON (YES in step S150), PLC engine 136 calculates a command value for driving each servomotor 530 constituting custom robot 550 based on the state value of each servomotor 530 in accordance with motion control instruction 1384 included in IEC program 138 (step S152).

PLC engine 136 determines whether the execution of motion control instruction 1384 included in IEC program 138 has been completed (step S154). If the execution of motion control instruction 1384 included in IEC program 138 is completed (YES in step S154), PLC engine 136 sets the operation flag to OFF (step S156).

If the execution of motion control instruction 1384 included in IEC program 138 has not been completed (NO in step S154), the processing in step S156 is skipped.

If the operation flag of custom robot 550 is not set to ON (NO in step S150), the processes in steps S152 to S156 are skipped.

Note that the processing of steps S150 to S156 is mainly described in motion control instruction 1384 included in IEC program 138.

Image processing engine 1422 determines whether an imaging trigger is received from PLC engine 136 (step S200). If the imaging trigger is not received from PLC engine 136 (NO in step S200), the processing in step S200 is repeated.

If the imaging trigger is received from PLC engine 136 (YES in step S200), image processing engine 1422 obtains the image captured by camera 20 (step S202), and recognizes the position of workpiece 8 included in the obtained image (step S204). The recognized position of workpiece 8 is a position defined by the camera coordinate system.

Image processing engine 1422 converts the recognized position of workpiece 8 into a position in the world coordinate system (step S206), and outputs the converted position of workpiece 8 to PLC engine 136 (step S208). Then, the processing in and after step S200 is repeated.

Robot control engine 1420 determines whether a new control command is received from PLC engine 136 (step S300). If a new control command is not received from PLC engine 136 (NO in step S300), the processing in step S300 is repeated.

If a new control command is received from PLC engine 136 (YES in step S300), robot control engine 1420 interprets a target portion of robot program 1442 according to the received control command, and starts sequentially generating instructions for controlling industrial robot 650 (step S302). Then, robot control engine 1420 transmits instructions that are sequentially generated to robot controller 600 (step S304).

Robot control engine 1420 obtains the current position of industrial robot 650 from robot controller 600 (step S306). The obtained current position of industrial robot 650 is a position defined by the camera coordinate system. Robot control engine 1420 converts the obtained current position of industrial robot 650 into a position in the world coordinate system (step S308), and outputs the converted current position of industrial robot 650 to PLC engine 136 (step S310).

Robot control engine 1420 determines whether generation of an instruction for controlling industrial robot 650 is continued (step S312). If the generation of the instruction for controlling industrial robot 650 is continued (YES in step S312), the processing in and after step S304 is repeated.

If the generation of the instruction to control industrial robot 650 is not continued (in the case of NO in step S312), the processing in and after step S300 is repeated.

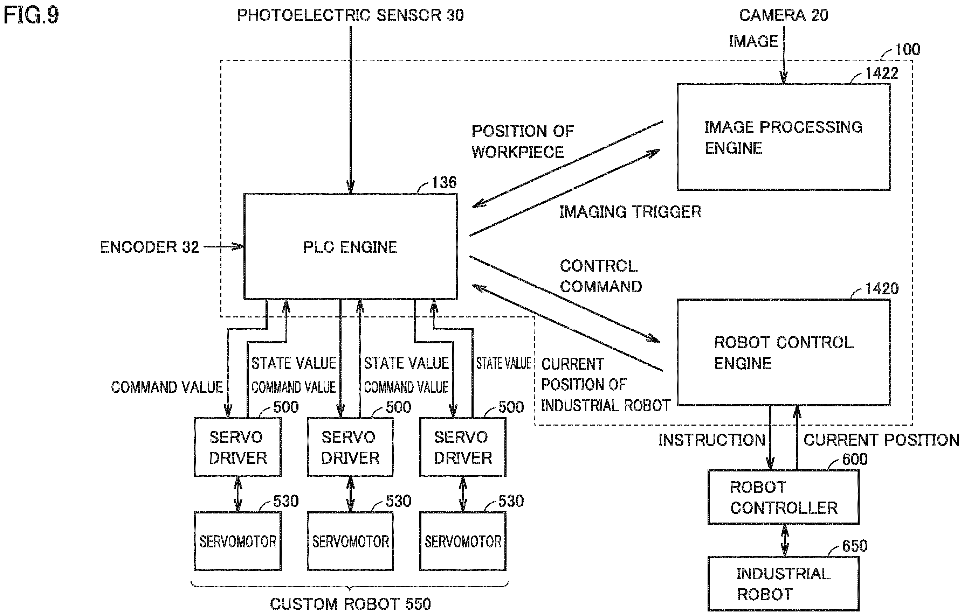

Fig. 9 is a schematic diagram illustrating an example of a software configuration realized by control device 100 for realizing the processing in conveyor system 2 illustrated in Fig. 7. Referring to Fig. 9, PLC engine 136, robot control engine 1420, and image processing engine 1422 exchange data with each other, and each engine exchanges data or signals with the control target.

More specifically, PLC engine 136 obtains a signal such as a rotational speed from encoder 32 included in conveyor system 2, and obtains a signal for detecting workpiece 8 from photoelectric sensor 30. PLC engine 136 gives a command value to servo driver 500 and obtains a state value from servo driver 500.

Further, PLC engine 136 gives a control command to robot control engine 1420 and obtains the current position of industrial robot 650 from robot control engine 1420. Further, PLC engine 136 gives an imaging trigger to image processing engine 1422 and obtains the position of workpiece 8 detected by image processing engine 1422 from image processing engine 1422.

Robot control engine 1420 gives an instruction for controlling industrial robot 650 to robot controller 600 and obtains the current position of industrial robot 650 from robot controller 600.

Image processing engine 1422 obtains an image captured by camera 20. Note that image processing engine 1422 may provide camera 20 with an imaging command.

As illustrated in Fig. 9, PLC engine 136, robot control engine 1420, and image processing engine 1422 included in control device 100 control conveyor system 2 by exchanging data or signals with an actual control target.

### <F. Visualizer>

Next, visualizer 1428 implemented in control system 1 according to the present embodiment will be described. Visualizer 1428 visualizes a state of the control target (device, equipment, or the like) controlled by control device 100 in a virtual space.

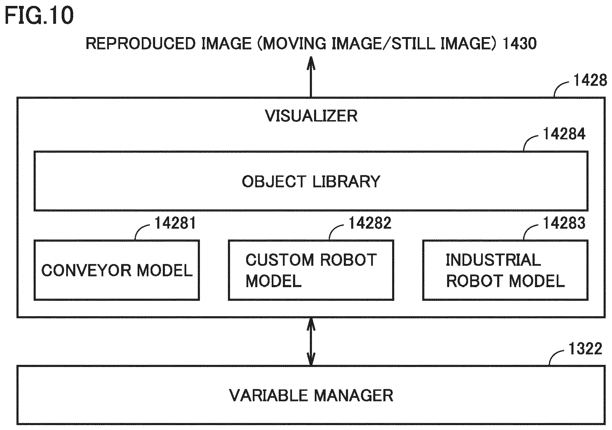

Fig. 10 is a schematic diagram illustrating a more detailed configuration of visualizer 1428 implemented in control system 1 according to the present embodiment. Referring to Fig. 10, visualizer 1428 generates a reproduced image 1430 in which the control target is reproduced in the virtual space with reference to the value of the variable managed by variable manager 1322. Reproduced image 1430 may be a moving image or a still image.

More specifically, visualizer 1428 includes a conveyor model 14281 that simulates conveyor 6, a custom robot model 14282 that simulates custom robot 550, an industrial robot model 14283 that simulates industrial robot 650, and an object library 14284.

Object library 14284 includes image data for synthesizing reproduced image 1430.

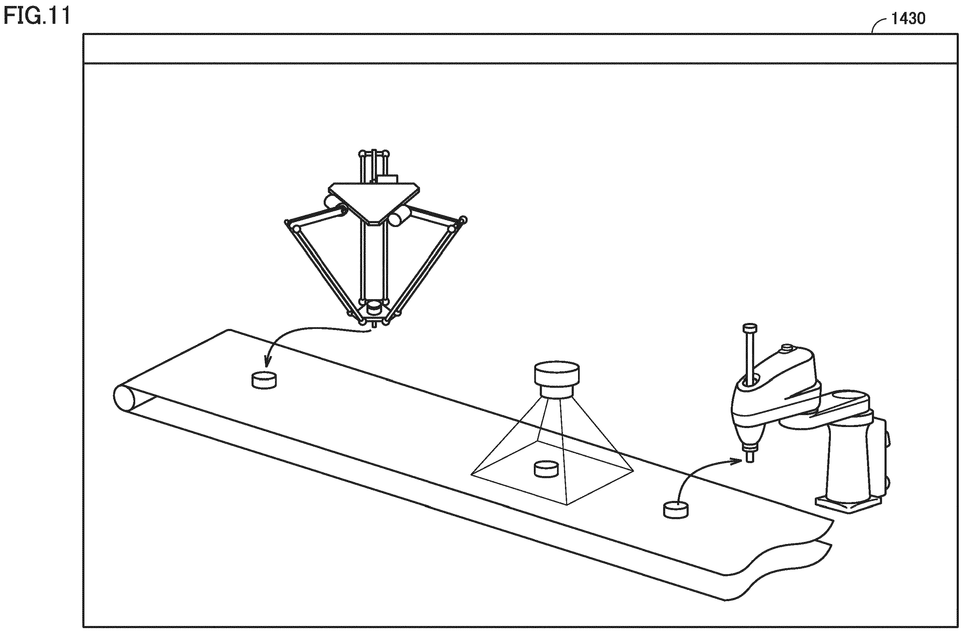

Fig. 11 is a schematic diagram illustrating an example of reproduced image 1430 provided by visualizer 1428 implemented in control system 1 according to the present embodiment. Reproduced image 1430 as illustrated in Fig. 11 can be displayed on display unit 108 or the like of control device 100.

The user can confirm the operation of user program 1108, find a problem, and the like while viewing displayed reproduced image 1430.

In a case where the control target is actually present, reproduced image 1430 provided by visualizer 1428 reflects the behavior of the actual control target as it is. On the other hand, even if all or a part of the control target does not actually exist, each engine of control device 100 executes processing, and visualizer 1428 can provide reproduced image 1430 as if the actual control target exists based on the processing result.

In control system 1 of the present embodiment, even if a part or all of the control target does not exist, an operation of user program 1108 can be confirmed as if the actual control target exists. Hereinafter, functions flexibly capable of developing the user program provided by control device 100 will be described.

### <G. Environment for flexible developments

In control system 1 according to the present embodiment, a mechanism (simulation module) that freely simulates a part or all of a control target is prepared.

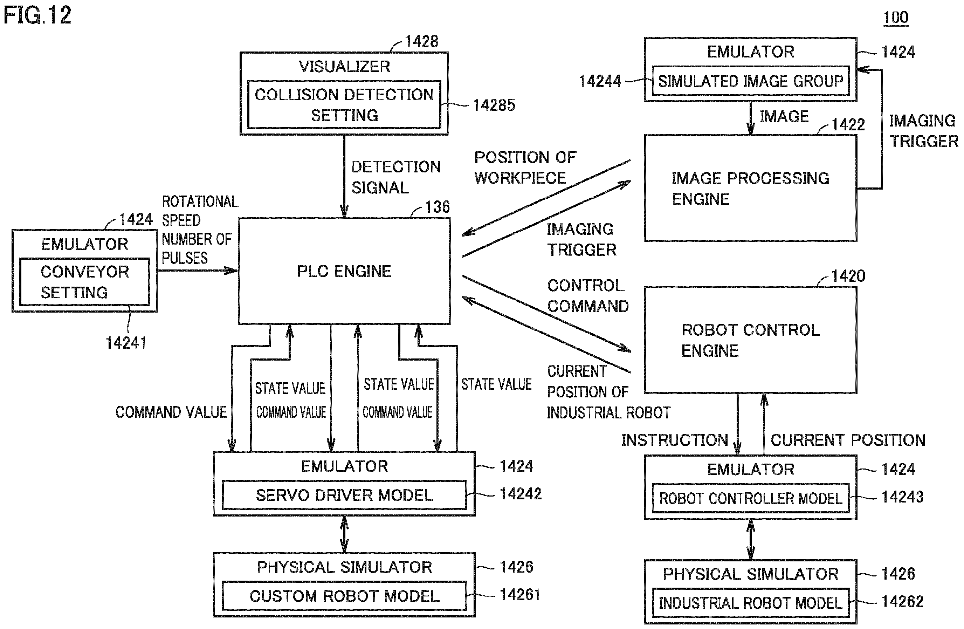

Fig. 12 is a schematic diagram illustrating an example of a software configuration for executing processing in control device 100 even when conveyor system 2 illustrated in Fig. 7 does not exist. Hereinafter, description will be made while comparing Fig. 9 and Fig. 12.

The control target for exchanging data or signals with control device 100 illustrated in Fig. 9 is simulated by at least one of emulator 1424, physical simulator 1426, and visualizer 1428 implemented in control device 100. That is, the simulation module may be realized by at least one of emulator 1424, physical simulator 1426, and visualizer 1428. By such simulation of the control target, user program 1108 can be executed in control device 100 as in the case where the control target exists.

### (g1: Encoder 32)

Encoder 32 of conveyor system 2 can be simulated by setting conveyor setting 14241 in emulator 1424. Emulator 1424 provides information simulating the rotational speed from encoder 32 to PLC engine 136 according to conveyor setting 14241.

As described above, the simulation module for encoder 32 is realized by using emulator 1424 that simulates the behavior of the device and/or equipment included in the control target.

### (g2: Photoelectric sensor 30)

Photoelectric sensor 30 of conveyor system 2 can be simulated by setting collision detection setting 14285 in visualizer 1428. Visualizer 1428 detects collision between workpiece 8 and the virtual object set in association with the detection range of photoelectric sensor 30 in the virtual space according to collision detection setting 14285, and thus provide a signal indicating that workpiece 8 is detected to PLC engine 136. The collision detection is processing of determining whether or not objects collide with each other based on closeness of a distance between the objects.

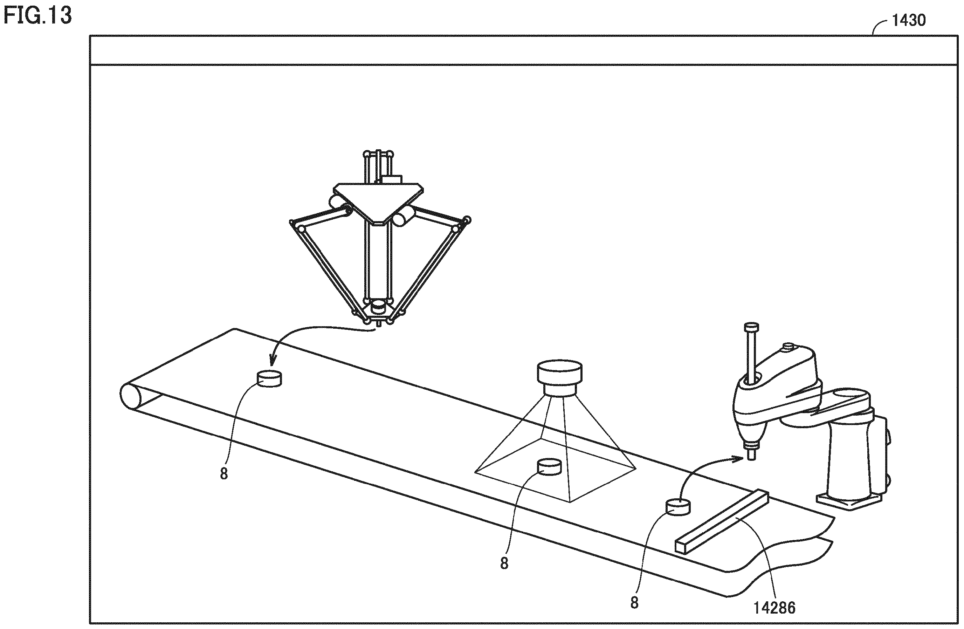

Fig. 13 is a schematic diagram illustrating a setting example of a virtual object for performing collision detection by visualizer 1428 illustrated in Fig. 12. Referring to Fig. 13, a virtual object 14286 is set in association with the detection range of photoelectric sensor 30 in the virtual space. The position of workpiece 8 on conveyor 6 is updated according to the tracking database managed by PLC engine 136. Visualizer 1428 determines whether any one of workpieces 8 collides with virtual object 14286, and generates a signal indicating detection of workpiece 8 by photoelectric sensor 30 if it is determined that workpiece 8 collides with virtual object 14286.

Thus, the simulation module for photoelectric sensor 30 is realized using results of the collision detection in the virtual space visualized by visualizer 1428.

### (g3: Custom robot 550)

Custom robot 550 of conveyor system 2 can be simulated by setting a servo driver model 14242 in emulator 1424 and setting a custom robot model 14261 in physical simulator 1426.

Servo driver model 14242 includes parameters reflecting response characteristics and the like of servo driver 500. Emulator 1424 calculates a state value of the servo driver according to the command value from PLC engine 136 in accordance with servo driver model 14242, and provides the calculated state value to PLC engine 136.

Custom robot model 14261 includes parameters reflecting kinematics and the like of servomotor 530 and custom robot 550. Physical simulator 1426 calculates the state value, the current position, and the like of custom robot model 14261 based on the state value calculated by emulator 1424 according to custom robot model 14261.

Note that Fig. 12 illustrates a configuration example in which custom robot 550 including servo driver 500 and servomotor 530 is simulated by emulator 1424 and physical simulator 1426, but may be simulated by using single emulator 1424.

As described above, the simulation module for custom robot 550 is realized by using emulator 1424 that simulates the behavior of the device and/or equipment included in the control target, and is realized by using physical simulator 1426 that simulates the physical motion of the object included in the control target.

### (g4: Industrial robot 650)

Industrial robot 650 of conveyor system 2 can be simulated by setting a robot controller model 14243 in emulator 1424, and setting an industrial robot model 14262 in physical simulator 1426.

Robot controller model 14243 includes parameters reflecting response characteristics and the like of robot controller 600. Emulator 1424 generates internal instructions for driving industrial robot 650 based on an instruction from robot control engine 1420 according to robot controller model 14243. Emulator 1424 provides the current position and the like of industrial robot 650 calculated by physical simulator 1426 to robot control engine 1420.

Industrial robot model 14262 includes parameters reflecting response characteristics, kinematics, and the like of industrial robot 650. Physical simulator 1426 calculates speed, acceleration, current position, and the like of industrial robot 650 based on the internal instruction calculated by emulator 1424 according to industrial robot model 14262.

Note that Fig. 12 illustrates a configuration example in which robot controller 600 and industrial robot 650 are simulated by emulator 1424 and physical simulator 1426, but may be simulated by using single emulator 1424.

As described above, the simulation module for industrial robot 650 is realized by using emulator 1424 that simulates the behavior of the device and/or equipment included in the control target, and is realized by using physical simulator 1426 that simulates the physical motion of the object included in the control target.

### (g5: Camera 20)

Camera 20 of conveyor system 2 can be simulated by setting a simulated image group 14244 in emulator 1424. Simulated image group 14244 includes one or more images corresponding to a predetermined place pattern of workpiece 8. Emulator 1424 sequentially provides the images included in simulated image group 14244 to image processing engine 1422 in response to the imaging trigger provided via image processing engine 1422.

Simulated image group 14244 may be generated by simulating a state in which workpiece 8 is sequentially placed and conveyed on conveyor system 2 in a virtual space and performing virtual imaging using a virtual camera arranged at a position corresponding to camera 20.

As described above, the simulation module for camera 20 is realized by using emulator 1424 that simulates the behavior of the device and/or equipment included in the control target.

Furthermore, instead of preparing simulated image group 14244, a virtual camera may be set in the virtual space provided by visualizer 1428, and images generated by being virtually captured by the virtual camera may be sequentially provided to image processing engine 1422. That is, camera 20 of conveyor system 2 may be simulated by setting a virtual camera in visualizer 1428, instead of using emulator 1424 and simulated image group 14244.

In the above description, user program 1108 is executed in control device 100 in the state where all of the control target is simulated, but the present invention is not limited to such an example, and any part of the control target may be simulated.

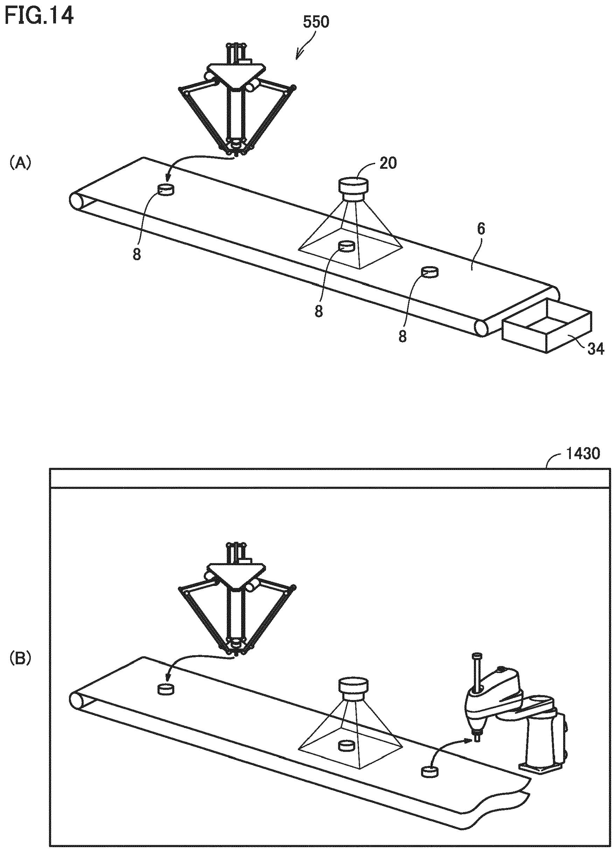

Fig. 14 is a diagram for describing a case in which the user program is executed in a state where industrial robot 650 is not disposed in conveyor system 2 illustrated in Fig. 7. Fig. 14(A) illustrates a state in which industrial robot 650 is not yet arranged in conveyor system 2 illustrated in Fig. 7. Even in the state as shown in Fig. 14(A), by enabling a mechanism for simulating industrial robot 650 as described above, reproduced image 1430 as shown in Fig. 14(B) can be displayed even if industrial robot 650 does not actually exist.

The user can confirm the operation of user program 1108, find a problem, and the like while viewing reproduced image 1430 as illustrated in Fig. 14(B).

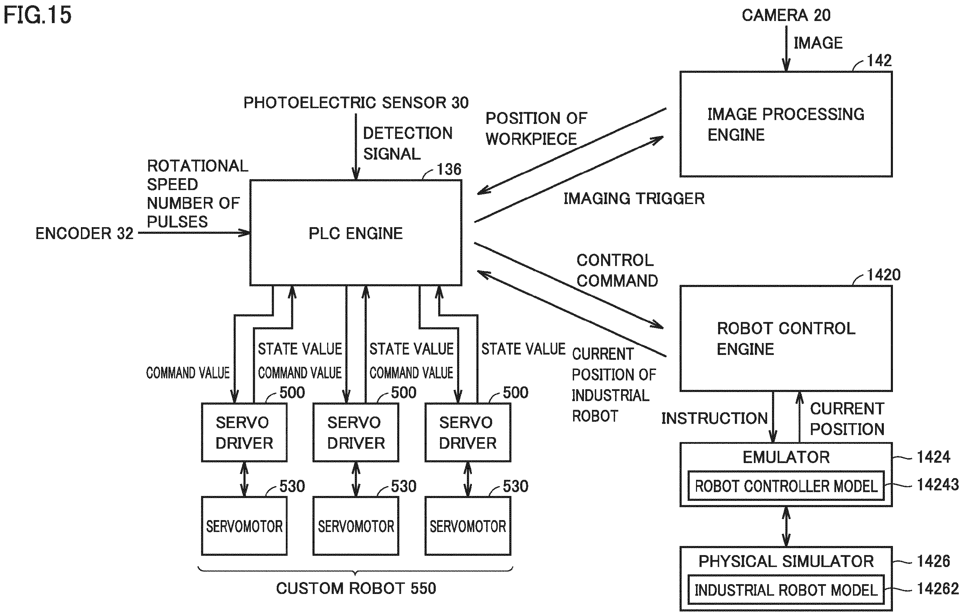

Fig. 15 is a schematic diagram illustrating an example of a software configuration for realizing the state shown in Fig. 14. In control device 100 illustrated in Fig. 15, emulator 1424 (in which robot controller model 14243 is set) and physical simulator 1426 (in which industrial robot model 14262 is set), which simulate robot controller 600 and industrial robot 650, are enabled. By such a simulation module (realized by using emulator 1424 and physical simulator 1426) that simulates robot controller 600 and industrial robot 650, control device 100 (PLC engine 136, robot control engine 1420, and image processing engine 1422) can execute user program 1108 as in the case where conveyor system 2 actually exists.

Note that the examples of the software configuration illustrated in Figs. 14 and 15 are mere examples, and a simulation module that simulates an arbitrary part or all of the control target controlled by control device 100 can be enabled.

By providing the environment as described above, the user can flexibly develop user program 1108.

### <H. Setting in control device 100/support device 200>

The user creates user program 1108 executed by control device 100 and program execution setting 1110 that defines an environment for executing user program 1108 on an integrated development environment. The integrated development environment may be implemented by support device 200 executing development program 2104 (see Fig. 4). However, control device 100 may provide the integrated development environment by control device 100 executing development program 2104.

In control device 100 according to the present embodiment, processing can be executed by simulating an arbitrary part of the control target. Program execution setting 1110 (see Fig. 3) includes setting as to whether or not to simulate such an arbitrary part of the control target.

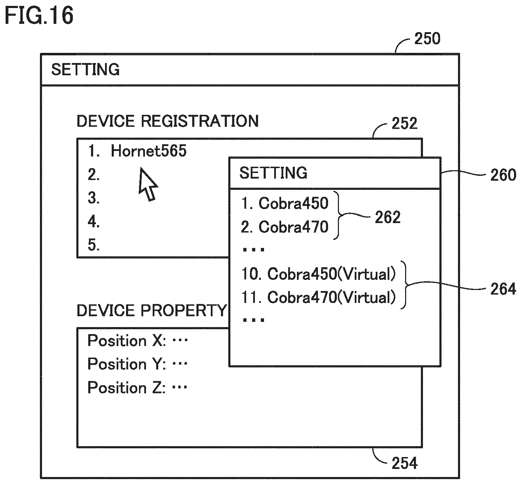

Fig. 16 is a view illustrating an example of a setting screen related to user program 1108 provided in control system 1 of the present embodiment. On setting screen 250 illustrated in Fig. 16, a device to be controlled that is associated with user program 1108 can be selected and set.

The device to be controlled includes a virtual device (simulating a real device) in addition to a real device.

More specifically, setting screen 250 includes a device registration field 252 for registering devices associated with user program 1108, and a device property field 254 for registering a property of each device.

When the user clicks device registration field 252, a device selection screen 260 for selecting a device is displayed. Device selection screen 260 includes a list 262 of real devices and a list 264 of virtual devices.

The user can arbitrarily select either a real device or a virtual device on device selection screen 260. The selection result by the user is reflected in program execution setting 1110. Then, user program 1108 executed by control device 100 is associated with the selected device.

As described above, support device 200 (alternatively, control device 100) provides setting screen 250 as illustrated in Fig. 16 as an example of a user interface for arbitrarily selecting a device associated with any one of PLC engine 136, robot control engine 1420, and image processing engine 1422 from candidates including real devices and virtual devices.

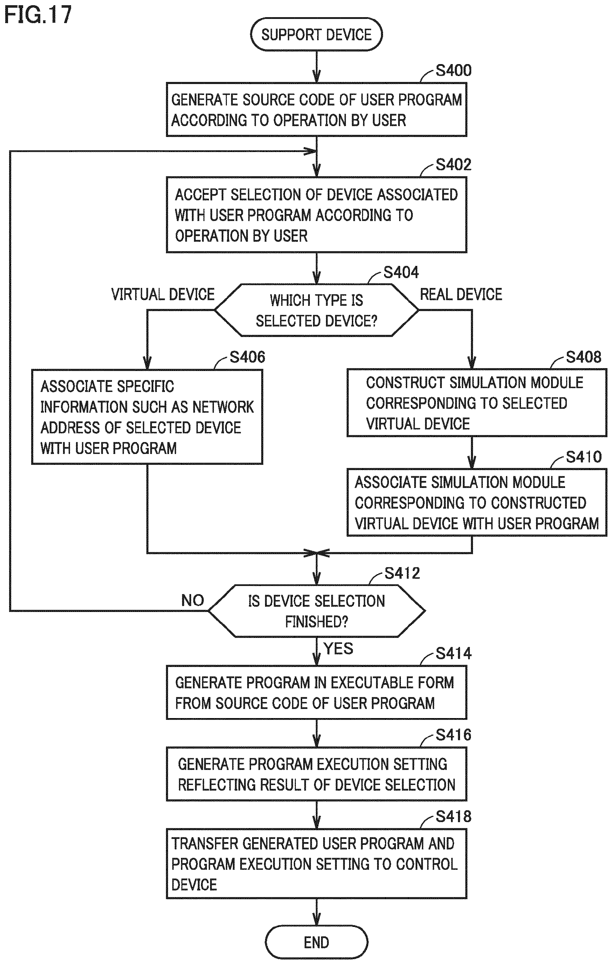

Fig. 17 is a flowchart showing schematic processing of a development process of user program 1108 in control system 1 according to the present embodiment. Steps shown in Fig. 17 are realized typically by processor 202 of support device 200 executing development program 2104.

Referring to Fig. 17, support device 200 generates a source code of user program 1108 according to an operation by the user (step S400).

Support device 200 receives selection of a device associated with user program 1108 according to an operation by the user (step S402). Support device 200 determines a type of the selected device (step S404). If the selected device is a real device ("real device" in step S404), support device 200 associates specific information such as a network address of the selected device with user program 1108 (step S406).

If the selected device is a virtual device ("virtual device" in step S404), support device 200 constructs a simulation module corresponding to the selected virtual device (step S408). More specifically, support device 200 constructs a simulation module that simulates the selected device by reflecting the setting of the selected device in one or more of emulators 1424, physical simulator 1426, and visualizer 1428. Support device 200 associates the simulation module corresponding to the constructed virtual device with user program 1108 (step S410).

As described above, when a virtual device is selected, support device 200 (alternatively, control device 100) constructs a simulation module corresponding to the selected virtual device. That is, support device 200 (alternatively, control device 100) can construct a simulation module that simulates at least a part of the control target, the robot, and the camera according to the user setting.

Support device 200 determines whether or not device selection is finished (step S412). If the device selection has not been completed (NO in step S412), the processing in and after step S402 is repeated.

On the other hand, when the device selection is finished (YES in step S412), support device 200 generates a program in an executable form from the source code of user program 1108 (step S414), and generates program execution setting 1110 reflecting a result of the device selection (step S416).

Finally, support device 200 transfers generated user program 1108 (executable form) and program execution setting 1110 to control device 100 (step S416). Then, the processing is completed. In this manner, the simulation module constructed by support device 200 may be provided to control device 100.

### <I. Modified example>

In the above description, the configuration example in which control device 100 and support device 200 are provided separately is described, but a part or all of the functions provided by support device 200 may be incorporated in control device 100. In this case, the user can develop user program 1108 by using the integrated development environment provided by control device 100.

### <J. Appendix>

The present embodiment described above includes the following technical ideas.

### [Configuration 1]

A control device (100) for controlling a control target (4), the control device comprising:
a PLC engine (136) configured to cyclically execute a program including a sequence instruction (1382);
a robot control engine (1420) configured to control a robot (600,650);
an image processing engine (1422) configured to execute image processing on an image from a camera (20); and
a simulation module (148) configured to simulate at least a part of the control target, the robot, and the camera, the simulation module being constructed according to user setting.

### [Configuration 2]

The control device according to configuration 1, further including:
a visualizer (1428) configured to visualize a state of the control target in a virtual space based on processing results of the PLC engine, the robot control engine, and the image processing engine.

### [Configuration 3]

The control device according to configuration 2, wherein
the simulation module is realized by using a result of collision detection in the virtual space visualized by the visualizer.

### [Configuration 4]

The control device according to any one of configurations 1 to 3, wherein
the simulation module is realized by using an emulator (1424) configured to simulate a behavior of a device and/or equipment included in the control target.

### [Configuration 5]

The control device according to any one of configurations 1 to 4, wherein
the simulation module is realized by using a simulator (1426) configured to simulate a physical motion of an object included in the control target.

### [Configuration 6]

The control device according to any one of configurations 1 to 5, further including:
a user interface (250) configured to receive selection of an arbitrary device from candidates including a real device and a virtual device, the device being associated with one of the PLC engine, the robot control engine, and the image processing engine; and
construction means (2105) configured to, when the virtual device is selected, construct the simulation module corresponding to the selected virtual device.

### [Configuration 7]

The control device according to any one of configurations 1 to 6, wherein
the PLC engine cyclically executes a motion control instruction (1384) for controlling one or more motors (530) that drive a robot (550), and
the robot control engine sequentially generates an instruction for controlling the robot according to a robot program.

### [Configuration 8]

The control device according to any one of configurations 1 to 7, further comprising:
a hypervisor (132) configured to manage common hardware resources (130), wherein
the hypervisor provides an execution environment for a real-time OS (134) and a general-purpose OS (140),
the PLC engine is running on the real-time OS, and
the robot control engine and the image processing engine are running on the general-purpose OS.

### [Configuration 9]

A control system (1) for controlling a control target (4), the control system (1) including:
a control device (100) including a PLC engine (136) configured to cyclically execute a program including a sequence instruction (1382), a robot control engine (1420) configured to control a robot (600,650), and an image processing engine (1422) configured to execute image processing on an image from a camera (20); and
a support device (200) configured to construct, according to user setting, a simulation module (148) that simulates at least a part of the control target, the robot, and the camera, and to provide the constructed simulation module for the control device.

### [Configuration 10]

A program (1102, 1104, 1106) for realizing a control device (100) for controlling a control target (4), the program causing a computer (100) to function as:
a PLC engine (136) configured to cyclically execute a program including a sequence instruction (1382);
a robot control engine (1420) configured to control a robot;
an image processing engine (1422) configured to execute image processing on an image from a camera; and
a simulation module (148) configured to simulate at least a part of the control target, the robot, and the camera, the simulation module being constructed according to user setting.

### <K. Advantages>

According to control system 1 of the present embodiment, it is possible to realize complicated control with a simpler configuration and to facilitate program development.

The embodiments disclosed herein should be considered to be illustrative in all respects and not restrictive. The scope of the present invention is defined by the claims, instead of the descriptions stated above, and it is intended that meanings equivalent to the claims and all modifications within the scope are included.

### REFERENCE SIGNS LIST

1: control system, 2: conveyor system, 4: control target, 6: conveyor, 8: workpiece, 10: network hub, 12: upper network, 14: field network, 20: camera, 30: photoelectric sensor, 32: encoder, 100: control device, 102, 202: processor, 104, 204: main memory, 106, 206: input unit, 108, 208: display unit, 110, 210: storage, 112, 114, 212: communication controller, 116, 216: optical drive, 118, 218: storage medium, 120: memory card interface, 122: memory card, 124, 224: USB controller, 128, 228: processor bus, 130: hardware resources, 132: hypervisor, 134: RTOS, 136: PLC engine, 138: IEC program, 140: general-purpose OS, 142: application engine, 144: application program, 148: simulation module, 200: support device, 250: setting screen, 252: device registration field, 254: device property field, 260: device selection screen, 262: list of real devices, 264: list of virtual devices, 300: display device, 400: server device, 500: servo driver, 530: servomotor, 550: custom robot, 600: robot controller, 650: industrial robot, 700: safety controller, 750: safety device, 800: IO unit, 1102: OS, 1104: PLC engine program, 1106: application engine program, 1108: user program, 1110: program execution setting, 1320: scheduler, 1322: variable manager, 1382: sequence instruction, 1384: motion control instruction, 1420: robot control engine, 1422: image processing engine, 1424: emulator, 1426: physical simulator, 1428: visualizer, 1430: reproduction image, 1442: robot program, 1444: image processing setting, 2104: development program, 2105: building module, 14241: conveyor setting, 14242: servo driver model, 14243: robot controller model, 14244: simulated image group, 14261, 14282: custom robot model, 14262, 14283: industrial robot model, 14281: conveyor model, 14284: object library, 14285: collision detection setting, 14286: virtual object

## Claims

1. A control device for controlling a control target, the control device comprising:
a PLC engine configured to cyclically execute a program including a sequence instruction;
a robot control engine configured to control a robot;
an image processing engine configured to execute image processing on an image from a camera; and
a simulation module configured to simulate at least a part of the control target, the robot, and the camera, the simulation module being constructed according to user setting.

2. The control device according to claim 1, further comprising:
a visualizer configured to visualize a state of the control target in a virtual space based on processing results of the PLC engine, the robot control engine, and the image processing engine.

3. The control device according to claim 2, wherein
the simulation module is realized by using a result of collision detection in the virtual space visualized by the visualizer.

4. The control device according to any one of claims 1 to 3, wherein
the simulation module is realized by using an emulator configured to simulate a behavior of a device and/or equipment included in the control target.

5. The control device according to any one of claims 1 to 4, wherein
the simulation module is realized by using a simulator configured to simulate a physical motion of an object included in the control target.

6. The control device according to any one of claims 1 to 5, further comprising:
a user interface configured to receive selection of an arbitrary device from candidates including a real device and a virtual device, the device being associated with one of the PLC engine, the robot control engine, and the image processing engine; and
construction means configured to, when the virtual device is selected, construct the simulation module corresponding to the selected virtual device.

7. The control device according to any one of claims 1 to 6, wherein
the PLC engine cyclically executes a motion control instruction for controlling one or more motors that drive a robot, and
the robot control engine sequentially generates an instruction for controlling the robot according to a robot program.

8. The control device according to any one of claims 1 to 7, further comprising:
a hypervisor configured to manage common hardware resources, wherein
the hypervisor provides an execution environment for a real-time OS and a general-purpose OS,
the PLC engine is running on the real-time OS, and
the robot control engine and the image processing engine are running on the general-purpose OS.

9. A control system for controlling a control target, the control system comprising:
a control device including a PLC engine configured to cyclically execute a program including a sequence instruction, a robot control engine configured to control a robot, and an image processing engine configured to execute image processing on an image from a camera; and
a support device configured to construct, according to user setting, a simulation module that simulates at least a part of the control target, the robot, and the camera, and to provide the constructed simulation module for the control device.

10. A program for realizing a control device for controlling a control target, the program causing a computer to function as:
a PLC engine configured to cyclically execute a program including a sequence instruction;
a robot control engine configured to control a robot;
an image processing engine configured to execute image processing on an image from a camera; and
a simulation module configured to simulate at least a part of the control target, the robot, and the camera, the simulation module being constructed according to user setting.
